# EUROPEAN PATENT APPLICATION

(11) **EP 1 083 416 A2**
(43) Date of publication of application: **14.03.2001**
(21) Application number: 99500253.2
(22) Date of filing: 28.12.1999
(51) Int. Cl.: G01G 19/10

(54) **Weighing apparatus for vehicles**

(30) Priority: 31.08.1999 ES 9901962
(71) Applicant: Catena Cogolludo, Joseluis, Coslada, Madrid (ES); Lopez Nunez, Luis, Coslada, Madrid (ES)
(72) Inventor: Catena Cogolludo, Joseluis, Coslada, Madrid (ES); Lopez Nunez, Luis, Coslada, Madrid (ES)

(57) **Abstract**

This load weighing equip for vehicles has one digital electronic display with printer (1), four hydraulic cylinders (2), one pressure sensor (3) and one dry nitrogen acumulator (4) and it's useful to know at any time the weight of the load in the transport box of any type of vehicle.

The digital electronic display is installed in the cabin of the vehicle to let, at any time, to see the weight of the load. The hydraulic cylinders are installed at the spring of the axles of the vehicle; the pressure sensor and the dry nitrogen acumulator are linked to the hydraulic cylinders by hydraulic pipes. The pressure sensor send the output signal to the display in the cabin of the vehicle.

## Description

This load weighing equip for vehicles has one digital electronic display with printer (1), four hydraulic cylinders (2), one pressure sensor (3) and one dry nitrogen acumulator (4) and it's useful to know at any time the weight of the load in the transport box of any type of vehicle.

The digital electronic display is installed in the cabin of the vehicle to let, at any time, to see the weight of the load. The hydraulic cylinders are installed at the spring of the axles of the vehicle; the pressure sensor and the dry nitrogen acumulator are linked to the hydraulic cylinders by hydraulic pipes. The pressure sensor send the output signal to the display in the cabin of the vehicle.

### LOAD WEIGHING EQUIP FOR TRANSPORT VEHICLES

The following invention regards to a load weighing equip for transport vehicles, thanks to it is possible to obtein improvements in relation to the rest of the systems known till now; These improvements simplify the installation of the equip on any type of truck, whatever its manufactured structure is.

### RECORD TO THE INVENTION

There are many known weighing equips for transport vehicles which have a high level of difficulty during their installation on the vehicles above mentioned, as it's necessary to change some very important pieces of the chassis of the vehicle for some others with sensors included; these new parts with the sensors detect their own flexion, showing a variation of the voltage output depending on the force exerted on them.

This old way of installation is very expensive both in pieces and in working hours and manpower.

To reduce the inconvinients of the installation procedure of these equips, the owners of the present invention have made a new equip with the following main characteristic: instead changing any piece of the vehicle, we add some components which we describe below. The load weighing equip for transport vehicles consist of 4 hydraulic cylinders (2) installed between the chassis and the running axle and linked all of them by hydraulic pipes to one dry nitrogen acumulator (4) that absorb the increasment of pressure in the pipes when the mechanical suspension of the vehicle goes down by the load.

In the set of pipes we install a pressure transducer (3) which, due the pressure variation, modifys the voltage output between a fixed range. This variation of the voltage output of the pressure transducer is processed by the electronic of the display (1) in the cabin which, after calibrating, will indicate the weight of the load.

### SHORT DESCRIPTION OF THE DRAWINGS

For a better understanding of what is described in the present memorandum, some drawings have been included, showing as an example one practical case of installation of one equip on a determinated type of vehicle.

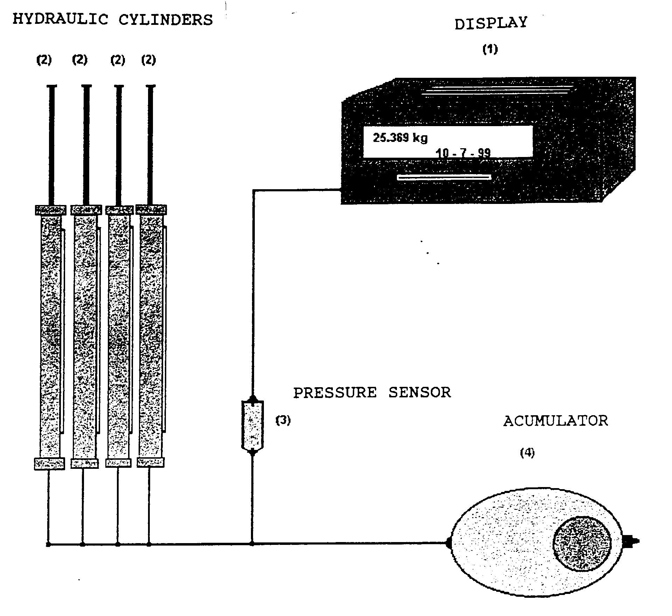

## Claims

1. Load weighing equip for transport vehicles
Of the type based on the flexion of the shock absorbing system, consisting of: hydraulic cylinders, acumulator, pressure transducer and the display unit, linked among them by hydraulic pipes and electrical wires between display & transducer.

2. Load weighing equip for transport vehicles, according to the reivindication 1., characterized by cylinders with the pushing pistons modified, fitted with multidirectionals ball-and-socket joints at their ends for a better couppling between the chassis and the running axles. The water-tight joint of the lid of the cylinders has also been modified to make the rod of the cylinders speeder and fluid-tighter for a better accuracy. The hydraulic oil used for this is type HLM-46, very fluid and stable/resistent to high temperatures; likewise, the hydraulic pipes are made in rubber with double high pressure mesh to facilitate its mobility during installation.

3. Load weighing equip for the transport vehicles, characterized becouse when this particular vehicle is being loaded, the shock absorbing system goes down, compress the rods of the cylinders, causing a volume difference in the hydraulic circuit, absorbing the acumulator part of this pressure increasment; at the same time, this variation of pressure modify the voltage output of the pressure transducer that is processed by the electronic display and shows, after the right calibration, the weight of the transported load.
